# EUROPÄISCHE PATENTSCHRIFT

(11) **EP 3 775 566 B1**
(45) Veröffentlichungstag und Bekanntmachung des Hinweises auf die Patenterteilung: **17.05.2023**
(21) Anmeldenummer: 19702852.5
(22) Anmeldetag: 30.01.2019
(51) Int. Cl.: F04D 23/00, F04D 25/06

(54) **SEITENKANALVERDICHTER FÜR EIN BRENNSTOFFZELLENSYSTEM ZUR FÖRDERUNG UND/ODER VERDICHTUNG VON EINEM GASFÖRMIGEN MEDIUM**
SIDE CHANNEL COMPRESSOR FOR A FUEL CELL SYSTEM FOR CONVEYING AND/OR COMPRESSING A GASEOUS MEDIUM
COMPRESSEUR À CANAL LATÉRAL POUR UN SYSTÈME DE PILES À COMBUSTIBLE PERMETTANT LE TRANSPORT ET/OU LA COMPRESSION D'UN MILIEU GAZEUX

(30) Priorität: 28.03.2018 DE 102018204713
(43) Veröffentlichungstag der Anmeldung: 17.02.2021
(73) Patentinhaber: Robert Bosch GmbH, 70442 Stuttgart (DE)
(72) Erfinder: MERZ, Armin, 71384 Weinstadt (DE); HERO, Alexander, 74251 Lehrensteinsfeld (DE)
(86) Internationale Anmeldenummer: PCT/EP2019/052193
(87) Internationale Veröffentlichungsnummer: WO 2019/185216

(56) Entgegenhaltungen:
- WO-A1-2017/009065
- DE-A1- 2 342 245
- DE-A1-102010 035 039
- JP-A- 2006 164 750
- JP-U- S56 171 695

## Beschreibung

### Stand der Technik

Die vorliegende Erfindung betrifft einen Seitenkanalverdichter für ein Brennstoffzellensystem zum Fördern und/oder Verdichten von einem gasförmigen Medium, insbesondere Wasserstoff, das insbesondere zur Anwendung in Fahrzeugen mit einem Brennstoffzellenantrieb vorgesehen ist.

Im Fahrzeugbereich spielen neben flüssigen Kraftstoffen in Zukunft auch gasförmige Kraftstoffe eine zunehmende Rolle. Insbesondere bei Fahrzeugen mit Brennstoffzellenantrieb müssen Wasserstoffgasströme gesteuert werden. Die Gasströme werden hierbei nicht mehr diskontinuierlich wie bei der Einspritzung von flüssigem Kraftstoff gesteuert, sondern es wird das Gas aus mindestens einem Hochdrucktank entnommen und über eine Zuströmleitung eines Mitteldruckleitungssystem an eine Ejektoreinheit geleitet. Diese Ejektoreinheit führt das Gas über eine Verbindungsleitung eines Niederdruckleitungssystems zu einer Brennstoffzelle. Nachdem das Gas durch die Brennstoffzelle geströmt ist, wird es über eine Rückführleitung zurück zur Ejektoreinheit geführt. Dabei kann der Seitenkanalverdichter zwischengeschaltet werden, der die Gasrückführung strömungstechnisch und effizienztechnisch unterstützt. Zudem werden Seitenkanalverdichter zur Unterstützung des Strömungsaufbaus im Brennstoffzellenantrieb eingesetzt, insbesondere bei einem (Kalt)-Start des Fahrzeugs nach einer gewissen Standzeit. Das Antreiben dieser Seitenkanalverdichter erfolgt üblicherweise über Elektromotoren, die beim Betrieb in Fahrzeugen über die Fahrzeugbatterie mit Spannung versorgt werden.

Aus der DE 10 2010 035 039 A1 ist ein Seitenkanalverdichter für ein Brennstoffzellensystem bekannt, bei dem ein gasförmiges Medium, insbesondere Wasserstoff, gefördert und/oder verdichtet wird. Der Seitenkanalverdichter weist dabei ein Gehäuse und einen Antrieb auf, wobei das Gehäuse ein Gehäuse-Oberteil und ein Gehäuse-Unterteil aufweist. Des Weiteren ist in dem Gehäuse ein umlaufend um eine Drehachse verlaufender Verdichterraum angeordnet, der mindestens einen umlaufenden Seitenkanal aufweist. In dem Gehäuse befindet sich ein Verdichterrad, das drehbar um die Drehachse angeordnet ist und durch den Antrieb angetrieben wird, wobei das Verdichterrad an seinem Umfang im Bereich des Verdichterraums angeordnete Schaufelblätter aufweist. Zudem weist der aus der DE 10 2010 035 039 A1 bekannte Seitenkanalverdichter jeweils eine am Gehäuse ausgebildeten Gas-Einlassöffnung und eine Gas-Auslassöffnung auf, die über den Verdichterraum , insbesondere den mindestens einen Seitenkanal, fluidisch miteinander verbunden sind. Dabei weist der Seitenkanalverdichter den Antrieb auf, der einen Stator aufweist, der hülsenförmig um die Drehachse verläuft, und in dessen Inneren ein auf einer Rotorwelle angeordneter Rotor angeordnet ist. Die Rotorwelle ist dabei mittels zwei jeweils axial zu den Stirnseiten des Rotors angeordneten Kugellagern gelagert. Der aus der DE 10 2010 035 039 A1 bekannte Seitenkanalverdichter kann dabei den Stator als ein Heizelement nutzen.

Aus der DE 23 42 245 A1 und der JP S56 171695 ist ein Seitenkanalverdichter, geeignet für ein Brennstoffzellensystem, bekannt, zur Förderung und/oder Verdichtung eines Gases, insbesondere Wasserstoff, mit einem Gehäuse und einem Antrieb, wobei das Gehäuse ein Gehäuse-Oberteil und ein Gehäuse-Unterteil aufweist, mit einem in dem Gehäuse umlaufend um eine Drehachse verlaufenden Verdichterraum, der mindestens einen umlaufenden Seitenkanal aufweist, mit einem in dem Gehäuse befindlichen Verdichterrad, das drehbar um die Drehachse angeordnet ist und durch den Antrieb angetrieben wird. Dabei weist das Verdichterrad an seinem Umfang im Bereich des Verdichterraums angeordnete Schaufelblätter auf und mit jeweils einer am Gehäuse ausgebildeten Gas-Einlassöffnung und einer Gas-Auslassöffnung, die über den Verdichterraum, insbesondere den mindestens einen Seitenkanal, fluidisch miteinander verbunden sind, wobei der Antrieb als ein Axialfeld-Elektromotor ausgeführt ist, der einen Stator und einen Rotor aufweist, wobei der Stator und der Rotor scheibenförmig umlaufend um die Drehachse ausgebildet sind und wobei der Stator in Richtung der Drehachse neben dem Rotor angeordnet ist.

In der DE 10 2010 035039 A1 ist ein Seitenkanalverdichter für ein Brennstoffzellensystem zur Förderung und/oder Verdichtung eines Gases, insbesondere Wasserstoff offenbart, mit einem Gehäuse und einem Antrieb, wobei das Gehäuse ein Gehäuse-Oberteil und ein Gehäuse-Unterteil aufweist, mit einem in dem Gehäuse umlaufend um eine Drehachse verlaufenden Verdichterraum, der mindestens einen umlaufenden Seitenkanal aufweist, mit einem in dem Gehäuse befindlichen Verdichterrad, das drehbar um die Drehachse angeordnet ist und durch den Antrieb angetrieben wird, wobei das Verdichterrad an seinem Umfang im Bereich des Verdichterraums angeordnete Schaufelblätter aufweist und mit jeweils einer am Gehäuse ausgebildeten Gas-Einlassöffnung und einer Gas-Auslassöffnung (implizit), die über den Verdichterraum, insbesondere den mindestens einen Seitenkanal, fluidisch miteinander verbunden sind.

Der aus den Schriften DE 10 2010 035 039, DE 23 42 245 A1, JP S56 171695 und DE 10 2010 035039 A1 bekannte Seitenkanalverdichter können gewisse Nachteile aufweisen.

Zum einen ist das Verdichterrad scheibenförmig ausgeführt und weist einen gro-ßen Durchmesser radial zur Drehachse auf und benötigt somit radial zur Drehachse viel Bauraum, während das Verdichterrad axial zur Drehachse schmal ausgeführt ist und somit radial zur Drehachse wenig Bauraum benötigt. Zum anderen weist jedoch der gezeigte Antrieb mit dem außerhalb des Rotors angeordneten Stator einen geringen Durchmesser radial zur Drehachse auf und benötigt somit radial zur Drehachse wenig Bauraum. Der Antrieb benötigt jedoch aufgrund der Anordnung von Stator und Rotor jedoch axial zur Drehachse viel Bauraum. Aufgrund dieser gegensätzlichen Bauraumanforderungen des Antriebs und des Verdichterrads ergibt sich bei einer Kombination und/oder Montage der beiden Komponenten ein sperriges und platzraubendes Gesamtsystem des Seitenkanalverdichters, das sich nicht in einer kompakten Bauweise umsetzen lässt.

Des Weiteren weist der aus der den Schriften DE 10 2010 035 039, DE 23 42 245 A1, JP S56 171695 und DE 10 2010 035039 A1 bekannte Seitenkanalverdichter den Nachteil auf, dass die Wärmeenergie bei einer Ansteuerung und/oder Verwendung des Stators als Heizelement, die Wärmeenergie einen eine weiten Weg über eine Vielzahl von Bauteilen zurücklegen muss, bis es zum Bereich vordringen kann, in dem die beweglichen Teile über Eisbrücken miteinander festfrieren können. Dabei geht viel Energie durch Wärmeverluste verloren, da ein gro-ßer Bereich mit Wärmeenergie beschickt wird in dem sich keine Eisbrücken ausbilden können und/oder in dem sich keine beweglichen Teile befinden.

### Offenbarung der Erfindung

### Vorteile der Erfindung

Erfindungsgemäß wird ein Seitenkanalverdichter für ein Brennstoffzellensystem vorgeschlagen, zum Fördern und/oder Verdichten von einem gasförmigen Medium, insbesondere Wasserstoff.

Bezugnehmend auf Anspruch 1 wird ein Seitenkanalverdichter vorgeschlagen, bei dem ein Antrieb als ein Axialfeld-Elektromotor ausgeführt ist, der einen Stator und einen Rotor aufweist, wobei der Stator und der Rotor scheibenförmig umlaufend um eine Drehachse ausgebildet sind und wobei der Stator in Richtung der Drehachse neben dem Rotor angeordnet ist. Zudem weist der scheibenförmige Rotor einen in Richtung der Drehachse verlaufenden zylindrischen Ansatz auf, wobei der zylindrische Ansatz auf der dem Stator abgewandten Seite des Rotors angeordnet ist und wobei die Mantelfläche des Außendurchmessers des zylindrischen Ansatzes umlaufend um die Drehachse verläuft und wobei der zylindrische Ansatz an seinem Innendurchmesser mit einem Außendurchmesser eines Lagers und an seinem Außendurchmesser mit dem Innendurchmesser des Verdichterrads, insbesondere mit der Naben-Scheibe des Verdichterrads in Kontakt steht. Dabei erfolgt der Kontakt des zylindrischen Ansatzes zum Lager und/oder zum Verdichterrad insbesondere kraftschlüssig mittels eines Pressverbands Auf diese Weise kann zum einen eine optimale Abstützung des Verdichterrads erzielt werden, da das Verdichterrad mittels des kraftschlüssigen Pressverbands fest mit dem Rotor verbunden ist. Dabei wird eine Verkippbewegung und/oder eine Taumelbewegung und/oder eine Bewegung des Verdichterrads radial und/oder axial zur Drehachse unterbunden, indem das Verdichterrad durch den Rotor und indirekt über das Lager geführt ist.

Weiterhin kann der Vorteil erzielt werden, dass bei einer Kaltstartprozedur des Seitenkanalverdichters mittels des Antriebs ein schnelles Aufheizen des Verdichterrads erfolgen kann, da die Wärmeenergie nur einen kurzen Weg zurücklegen muss, insbesondere vom Rotor über den zylindrischen Ansatz in das Verdichterrad zum inneren Begrenzungsring und zu einem außenliegenden Ringbund. Aufgrund der kurzen Abstände zwischen dem Rotor und den Bereichen, in denen es zu Eisbrückenbildung kommen kann, muss die Wärmeenergie aus dem Antrieb nur ein geringes Volumen an Bauteilen des Seitenkanalverdichters erwärmen, wodurch ein schnelleres und energieeffizientes Aufheizen des Seitenkanalverdichters erreicht werden kann. Somit lassen sich die Wärmeenergieverluste reduzieren, da die Wärmeenergie durch die konstruktive Ausgestaltung des Seitenkanalverdichters gezielt in die Bereiche geleitet werden kann, die aufgeheizt werden müssen, insbesondere aufgrund von Eisbrückenbildung.

Die Unteransprüche betreffen bevorzugte Weiterbildungen der Erfindung.

Gemäß einer vorteilhaften Ausgestaltung bildet sich ein scheibenförmig um die Drehachse umlaufender Luftspalt zwischen dem Stator und dem Rotor derart aus, dass der Luftspalt nur in der einen Richtung der Drehachse vom Stator und in der anderen Richtung der Drehachse vom Rotor begrenzt wird. Weiterhin ist der scheibenförmige Rotor axial zur Drehachse neben dem Verdichterrad angeordnet, insbesondere an einer Naben-Scheibe des Verdichterrads, wobei der Rotor kraftschlüssig und/oder formschlüssig und/oder stoffschlüssig mit dem Verdichterrad verbunden ist. Auf diese Weise kann der Vorteil erzielt werden, dass ein effizientes und schnelleres Vorheizen des Seitenkanalverdichters zumindest mittels des Stators möglich ist, um eine zuverlässige Kaltstartprozedur des Seitenkanalverdichters und des Brennstoffzellensystems durchzuführen. Bei niedrigen Umgebungstemperaturen, insbesondere im Bereich unterhalb 0°C, kann sich nach dem erfolgten Abschalten des Brennstoffzellensystems und des Seitenkanalverdichters Flüssigkeit, insbesondere Wasser, aus einem zu fördernden Rezirkulationsmedium auskondensieren. Dabei können sich, insbesondere bei langen Standzeiten, Eisbrücken zwischen den beweglichen Teilen des Seitenkanalverdichters, insbesondere dem Verdichterrad und dem Gehäuse, bilden. Derartige Eisbrücken können ein Starten, insbesondere einen Kaltstart, des Brennstoffzellensystems, insbesondere des Seitenkanalverdichters, erschweren und/oder vollständig verhindern. Beim Starten des Fahrzeugs und somit des Brennstoffzellen systems kann dies weiterhin bei zu großer Eisbrückenbildung zu einem Blockieren des Antriebs führen, wodurch die rotierenden Teile, insbesondere das Verdichterrad beschädigt werden können und/oder ein Starten des Systems erschwert beziehungsweise verzögert oder vollständig verhindert wird. Die Möglichkeit eines effizienten und schnellen Vorheizens des Seitenkanalverdichters aufgrund der konstruktiven Ausgestaltung des Rotors und/oder des Stator als scheibenförmige Bauteile, ermöglicht ein schnelles Abbauen der Eisbrücken, insbesondere durch Schmelzen, mittels des Antriebs. Dadurch lässt sich der Vorteil eine zuverlässige und schnelle Kaltstartprozedur des Seitenkanalverdichters und des Brennstoffzellensystems durchzuführen. Dies führt zu einer höheren Zuverlässigkeit des Brennstoffzellensystems und/oder des Fahrzeugs.

Zudem kann auf diese Weise der Vorteil erzielt werden, dass durch die Anordnung des scheibenförmig um die Drehachse umlaufender Luftspalt zwischen dem Stator und dem Rotor eine kompakte Bauweise des Seitenkanalverdichters erzielt werden kann. Darüber hinaus bietet diese Anordnung des Luftspalts, des Stators und des Rotors den Vorteil einer schnellen Montage und Demontage in Richtung der Drehachse, wodurch die Montagekosten reduziert werden können und wodurch auftretende Wartungskosten reduziert werden können.

Gemäß einer vorteilhaften Ausgestaltung bildet das Verdichterrad im Bereich eines Verdichterraums zwischen jeweils zwei benachbarten Schaufelblättern jeweils eine Förderzelle aus. Diese Förderzelle ist radial zur Drehachse nach au-ßen durch einen äußeren umlaufenden Begrenzungsring und nach innen durch einen inneren umlaufenden Begrenzungsring des Verdichterrads begrenzt. Dabei weist die Förderzelle in Richtung der Drehachse mindestens eine Öffnung auf. Der äußere Begrenzungsring und der innerer Begrenzungsring verlaufen dabei rotationssymmetrisch um die Drehachse. Auf diese Weise kann erreicht werden, dass die Strömung des gasförmigen Mediums, insbesondere eine Zirkulationsströmung, nur axial zur Drehachse zur und von der Förderzelle strömt und sich somit nur eine axiale Bewegung des gasförmigen Mediums zwischen dem mindestens einen Seitenkanal und der Förderzelle einstellt. Dies bietet den Vorteil, dass sich eine Strömung des gasförmigen Mediums nur in dem Bereich einstellt, in dem Sie erwünscht ist, nämlich zwischen dem Seitenkanal und der Förderzelle. Reibungsverluste aufgrund einer Reibung des Mediums mit anderen Bereichen des Seitenkanalverdichters, die keine verbesserte Förderung und Verdichtung des gasförmigen Mediums bewirken, können weitestgehend reduziert und/oder vermieden werden, wodurch sich der Wirkungsgrad des Seitenkanalverdichters erhöhen lässt.

Gemäß einer vorteilhaften Ausbildung weist ein Gehäuse-Unterteil einen zylindrischen Lagerzapfen auf, wobei der Lagerzapfen derart in Richtung der Drehachse verläuft, dass seine Mantelfläche umlaufend um die Drehachse verläuft und wobei das Lager, das insbesondere als ein Rillenkugellager ausgeführt ist, radial zur Drehachse mit seinem Innendurchmesser mit der Mantelfläche des Lagerzapfens in Kontakt steht. Auf diese Weise kann der Vorteil erzielt werden, insbesondere mit der erfindungsgemäßen Ausgestaltung des Seitenkanalverdichters bei der der Antrieb als Axialfeld-Elektromotor ausgeführt ist, dass eine Antriebswelle zum Übertragen einer Rotationsbewegung und eines Drehmoments vom Antrieb auf das Verdichterrad und ein zweites Lager nicht mehr benötigt werden. Durch die axiale Vorspannung des Lagers über den Rotor kann der Vorteil erzielt werden, dass das Verdichterrad über das Lager und die über den Rotor eingebrachte Axialkraft axial und radial zur Drehachse in Position gehalten wird und darüber hinaus ein Verkippen oder Taumeln des Verdichterrads verhindert wird, während eine Rotationsbewegung des Verdichterrads nahezu uneingeschränkt möglich ist. Da der Magnet und/oder die magnetischen Bauteile im Stator als Permanentmagnet ausgeführt sind, steht das Lager permanent unter Vorspannung, auch bei einem ausgeschalteten Axialfeld-Elektromotor. Dadurch lässt sich zum einen der Vorteil erzielen, dass die Bauteile Antriebswelle und zweites Lager eingespart werden können, was die Bauteilkosten und die Montagekosten reduziert. Zusätzlich lässt sich der Vorteil erzielen, dass die internen Reibungsverluste reduziert werden können, da weniger Bauteile in Bewegung, insbesondere in Rotationsbewegung, sind. Dadurch lässt sich der Wirkungsgrad des Seitenkanalverdichters verbessern und somit die Betriebskosten reduzieren. Zudem lässt sich auf diese Weise der Vorteil erzielen, dass eine kompakte Bauweise des Seitenkanalverdichters erreicht werden kann.

In einer nicht beanspruchten Ausführung ist der Rotor radial zur Drehachse nahezu vollständig im Bereich des Innendurchmessers des Verdichterrads angeordnet, so dass eine Symmetrieachse des scheibenförmigen Rotors nahezu deckungsgleich mit der Symmetrieachse des Verdichterrads verläuft und wobei der Rotor mit einem Außendurchmesser des Lagers und einem Innendurchmesser des Verdichterrads in Kontakt steht, wobei der Rotor in einem axial zur Drehachse verlaufenden Fügebereich mit dem Verdichterrad einen Kontaktbereich ausbildet. Auf diese Weise kann der Vorteil erzielt werden, dass ein großer Teil des Materials für das Verdichterrad eingespart werden kann, da der Bereich des Verdichterrads zwischen dem inneren Begrenzungsring und dem Lager durch das Bauteil Rotor ersetzt werden kann. Dadurch lassen sich die Materialkosten und die Montagekosten reduzieren. Weiterhin werden dadurch die zu bewegenden Maßen innerhalb des Seitenkanalverdichters reduziert, was insbesondere beim Starten und Abbremsen des Seitenkanalverdichters vorteilhaft ist, wodurch die benötigte Energie zum Betreiben des Seitenkanalverdichters reduziert werden kann und somit die Betriebskosten reduziert werden können. Durch die weiter verkürzten Abstände des Rotors zu den Bereichen des Seitenkanalverdichters, in denen es zur Eisbrückenbildung kommen kann, ein schnelleres und energieeffizientes Aufheizen des Seitenkanalverdichters erreicht werden. Somit lassen sich die Wärmeenergieverluste reduzieren, da die Wärmeenergie durch die konstruktive Ausgestaltung des Seitenkanalverdichters gezielt in die Bereiche geleitet werden kann, die aufgeheizt werden müssen, insbesondere aufgrund von Eisbrückenbildung. Dabei ist der Rotor innerhalb des Verdichterrads nahe an dem Bereich des inneren Begrenzungsring und dem Bereich des außenliegenden Ringbunds angeordnet, wodurch der Rotor und/oder das Verdichterrad durch eine Bestromung des Stators aufgeheizt werden kann.

Gemäß einer besonders vorteilhaften Ausbildung wird der Stator zumindest teilweise von einem topfförmigen Dichtelement umschlossen. Dabei ist das topfförmige Dichtelement insbesondere als eine Kunstoffumspritzung des Stators ausgeführt, wobei das Dichtelement eine Kapselung der elektrischen Komponenten des Seitenkanalverdichters, insbesondere des Stators, vom Medium des Verdichterraums, insbesondere Wasserstoff, bewirkt. Auf diese Weise lässt sich der Vorteil erzielen, dass der Bereich des Stators, der elektrische Leitungen und Spulen aufweist und der somit besonders anfällig gegen eindringende Feuchtigkeit ist, gekapselt werden kann. Dabei erfolgt die Kapselung durch den Einsatz des topfförmigen Dichtelements derart, so dass ein Kurzschluss durch Flüssigkeitseintrag vermieden werden kann, da sich alle elektrischen Bauteile, wie beispielsweise die Magnetspule, innerhalb des gekapselten Raums befinden und somit gegen Flüssigkeit geschützt sind. Dabei steht das topfförmige Dichtelement mit einem Großteil seiner Oberfläche mit dem Gehäuse, insbesondere einem Gehäuse-Oberteil in derart in Anlage, insbesondere radial zur Drehachse, dass sich eine große Kontaktfläche ausbildet, wobei sich insbesondere das topfförmige Dichtelement mit einer Kraft gegen die Oberfläche des Gehäuse drückt, wodurch eine verbesserte Kapselung des Bereichs des Stators erzielt werden kann, da die Feuchtigkeit einen relativ langen Eindringpfad zwischen dem topfförmigen Dichtelement und dem Gehäuse überwinden müsste. Die Kraft, bei der es sich insbesondere um eine Dichtkraft handelt, wird derart erzielt, dass die radial zur Drehachse ausgebildet Oberfläche des topfförmigen Dichtelements einen leicht vergrößerten Außendurchmesser im Verhältnis zum Innendurchmesser des Gehäuses im Kontaktbereich ausbildet. Dabei wirkt sich vorteilhaft aus, dass das Dichtelement aus einem elastischen Material hergestellt ist, und wobei das topfförmige Dichtelement bei der Montage in dem Bereich des Gehäuses radial zur Drehachse hin zusammengedrückt wird, wobei sich das topfförmige Dichtelement nach erfolgter Montage wieder in seine ursprüngliche Form aufgrund der Elastizität zurückbewegt und dabei mit einer Presskraft und/oder Klemmkraft gegen die Oberfläche des Gehäuses, insbesondere gegen einen Innendurchmesser des Gehäuses, drückt und/oder in Anlage kommt. Dadurch lässt sich eine verbesserte Kapselung der elektrischen Bauteile des Seitenkanalverdichters erzielen und somit kann die Lebensdauer erhöht werden. Weiterhin lässt sich die Ausfallwahrscheinlichkeit des Axialfeld-Elektromotors und/oder des Seitenkanalverdichters durch eine Vorschädigung des Dichtelementes vor der Montage reduzieren. Des Weiteren lässt sich auf diese Weise der Vorteil erzielen, dass ein einfacher, kostengünstiger und schneller Austausch des Antriebs, insbesondere des Stators und der elektrischen Bauteile vorgenommen werden kann. Dabei können sich diese Komponenten komplett im gekapselten Bereich innerhalb des Antriebs-Gehäuses und des topförmigen Dichtelement befinden, wobei sich diese modulare Baugruppe komplett in Richtung der Drehachse aus dem Seitenkanalverdichter demontieren und abnehmen lässt.

Gemäß einer vorteilhaften Weiterbildung weist das Verdichterrad einen um die Drehachse umlaufenden inneren Begrenzungsring auf, wobei der innere Begrenzungsring am Innendurchmesser des umlaufenden Verdichterraum am Verdichterrad ausgebildet ist und wobei der umlaufende innere Begrenzungsring eine Trennung und/oder Kapselung des Verdichterraums von einer inneren Region des Seitenkanalverdichters bewirkt. Des Weiteren weist das Verdichterrad im Bereich des äußeren Begrenzungsrings mindestens einen außenliegenden umlaufenden Ringbund auf, der insbesondere radial zur Drehachse verläuft, wobei der mindestens eine umlaufende Ringbund auf der der Drehachse abgewandten Seite des äußeren Begrenzungsrings verläuft. Auf diese Weise kann der Vorteil erzielt werden, dass kann erreicht werden, dass die Strömung des gasförmigen Mediums, insbesondere eine Zirkulationsströmung, nur axial zur Drehachse zur und von der Förderzelle strömt und sich somit nur eine axiale Bewegung des gasförmigen Mediums zwischen dem mindestens einen Seitenkanal und der Förderzelle einstellt. Dies bietet den Vorteil, dass sich eine Strömung des gasförmigen Mediums nur in dem Bereich einstellt, in dem Sie erwünscht ist, nämlich zwischen dem Seitenkanal und der Förderzelle. Reibungsverluste aufgrund einer Reibung des Mediums mit anderen Bereichen des Seitenkanalverdichters, die keine verbesserte Förderung und Verdichtung des gasförmigen Mediums bewirken, können weitestgehend reduziert und/oder vermieden werden, wodurch sich der Wirkungsgrad des Seitenkanalverdichters erhöhen lässt. Darüber hinaus kann eine unerwünschte Temperaturerhöhung des gasförmigen Mediums aufgrund von Reibung vermindert werden. Ein weiterer erzielbarer Vorteil ist eine zumindest teilweise Kapselung des mindestens einen Seitenkanals und/oder der Förderzelle zu einer äußeren Region und/oder zu einer inneren Region im Gehäuse erfolgt.

Gemäß eines vorteilhaften Verfahrens erfolgt eine Bestromung des Stators, ohne dass sich ein Drehfeld zwischen dem Stator und dem Rotor aufbaut und sich somit keine oder eine sehr geringe Drehbewegung des Rotors um die Drehachse einstellt. Dabei wird der Stator bei einer kurzfristigen Bestromung der Spulen des Stators aufgewärmt, insbesondere aufgrund der entstehenden Verlustleistung, die als Wärmeenergie freigesetzt wird. Vom Stator breitet sich diese Wärmeenergie dann auf die weiteren Bauteile des Seitenkanalverdichters aus. Zudem kann in einer weiteren möglichen Ausführungsform mittels eines vorteilhaften Verfahrens eine Bestromung des Stators derart durchgeführt werden, dass eine induktive Erwärmung des Rotors erfolgt, wobei insbesondere ein Wärmeenergieübertrag vom Rotor auf das Verdichterrad erfolgt und wobei sich die Wärme aus dem Rotor in einer Flussrichtung in den Bereich der axialen Enden des inneren Begrenzungsrings und des mindestens eines außenliegenden Ringbunds des Verdichterrads ausbreitet. Auf diese Weise kann der Vorteil erzielt werden, dass durch die Bestromung des Stators bei einem nicht vorhandenen Drehfeld eine Erwärmung des Rotors einstellt, wobei hierzu insbesondere der Effekt der Induktion verwendet wird. Dabei lässt sich der Rotor, der insbesondere aus einem wärmeleitfähigen Material besteht, erwärmen, was insbesondere bei einer Kaltstart prozedur des Seitenkanalverdichters und/oder des Fahrzeugs vorteilhaft ist. Dabei erwärmt sich der Rotor und überträgt, beispielsweise aufgrund seiner Wärmeleitfähigkeit die Wärmeenergie auf das Verdichterrad. Dabei erfolgt der Wärmeenergieübertrag in einer Flussrichtung in den Bereich zwischen dem Verdichterrad und dem Gehäuse, in dem sich Eisbrücken ausgebildet haben. Diese Eisbrücken entstehen aufgrund von einer vorhandenen Flüssigkeit, insbesondere Wasser, das sich beim Betrieb des Brennstoffzellensystems bildet und dass sich insbesondere im Bereich mit einem geringen Spaltmaß zwischen dem Verdichterrad und dem Gehäuse ansammelt. Bei einem Abschalten des Seitenkanalverdichters und/oder des Fahrzeugs, insbesondere über einen längeren Zeitraum und/oder bei niedrigen Umgebungstemperaturen unter dem Gefrierpunkt, gefriert die Flüssigkeit und es bilden sich Eisbrücken aus. Diese Eisbrücken können bei einem Anfahren und/oder Starten des Seitenkanalverdichters zur Beschädigung des Seitenkanalverdichters führen und/oder eine Rotation des Verdichterrads im Gehäuse durch ein Blockieren verhindern. Weiterhin kann bei einem Anfahren des Verdichterrads ein Losbrechen bewirkt werden, bei dem scharfkantige Eisstücke freigesetzt werden, die in Förderrichtung Bauteile hinter dem Seitenkanalverdichter und/oder einer Brennstoffzelle, insbesondere die Membran der Brennstoffzelle schädigen können. Durch das Aufheizen des Rotors wird dabei das Verdichterrad und insbesondere der Bereich des inneren Begrenzungsrings und des außenliegenden Ringbunds, die beide jeweils einen geringen Abstand, insbesondere ein geringes Spaltmaß, zum Gehäuse ausbilden, erwärmt. Dadurch schmelzen die Eisbrücken und die Flüssigkeit wechselt von einem festen zu einem flüssigen Aggregatzustand und kann abgeführt werden, beispielsweise mittels eines im Brennstoffzellensystem vorhandenen Purgeventil und/oder Ablassventil. Auf diese Weise kann die Lebensdauer des Seitenkanalverdichters und/oder des Brennstoffzellensystems erhöht werden.

Gemäß eines besonders vorteilhaften Verfahrens wird mittels einer Bestromung des Stators die Axialkraft auf den Rotor in Richtung der Drehachse bewirkt, wodurch sich der Rotor in Richtung der Drehachse bewegt und wobei durch ein Variieren und/oder umkehren der elektrischen Bestromungsleistung eine Rüttelbewegung bewirkt wird. Dabei wird durch die Rüttelbewegung des Rotors eine wechselnde Zu- und Abnahme des in Richtung der Drehachse verlaufenden Abstands zwischen dem Verdichterrad und dem Gehäuse-Oberteil und/oder dem Gehäuse-Unterteil bewirkt, insbesondere im Bereich der axialen Enden des inneren Begrenzungsrings und des mindestens eines außenliegenden Ringbunds des Verdichterrads. Auf diese Weise lässt sich der Vorteil erzielen, dass zwischen dem Verdichterrad und dem Gehäuse auftretende Eisbrücken, die sich insbesondere bei einem Abschalten des Seitenkanalverdichters über einen längeren Zeitraum und/oder bei niedrigen Umgebungstemperaturen unter dem Gefrierpunkt bilden können, durch die Rüttelbewegung des Rotors zerstört werden. Somit werden die Eisbrücken, die beispielsweise aus Eiskristallen bestehen, zertrümmern, indem der Rotor und/oder das Verdichterrad eine Rüttelbewegung ausführen und/oder sich der Rotors in Richtung der Drehachse hin- und herbewegt. Dabei ist vorteilhaft, dass sich die kristalline Struktur der gefrorenen Flüssigkeit besonders effizient durch eine Rüttelbewegung oder ein Hin- und Herbewegen des Verdichterrads aufheben und/oder zerstören lässt. Somit kann durch das vorteilhafte Verfahren zum einen die Kaltstartfähigkeit des Seitenkanalverdichters verbessert werden. Zum anderen kann die Ausfallwahrscheinlichkeit des Seitenkanalverdichters und/oder des gesamten Brennstoffzellensystems reduziert werden, da ein nahezu vollständiges Beseitigen der Eisbrücken erzielt werden kann.

### Kurze Beschreibung der Zeichnung

Anhand der Zeichnung wird die Erfindung nachstehend eingehender beschrieben.

Es zeigt:
- Figur 1: eine schematische Schnittansicht eines erfindungsgemäßen Seitenkanalverdichters gemäß einem ersten Ausführungsbeispiel,
- Figur 2: einen in Figur 1 mit A-A bezeichneten Schnitt des Seitenkanalverdichters in vergrößerter Darstellung,
- Figur 3: einen in Figur 1 mit II bezeichneten Ausschnitt des Seitenkanalverdichters in vergrößerter Darstellung gemäß einem zweiten, nicht erfindungsgemäßen Ausführungsbeispiel,

- Figur 4: einen in Figur 3 mit III bezeichneten Ausschnitt eines Verdichterrads eines Gehäuses und eines Rotors gemäß dem zweiten Ausführungsbeispiel.

### Beschreibung der Ausführungsbeispiele

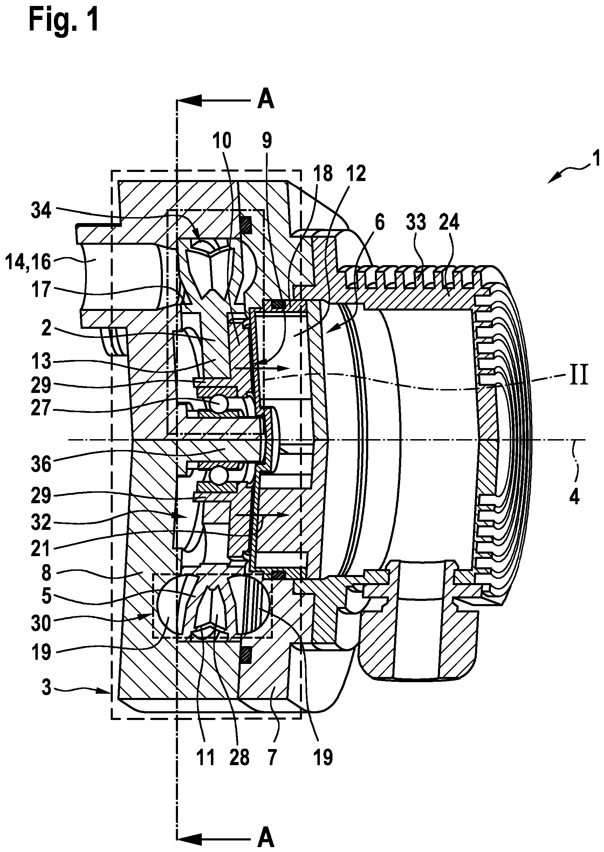

Der Darstellung gemäß **Fig.** 1 ist ein Längsschnitt durch einen rotationssymmetrisch zu einer Drehachse 4 ausgebildeten erfindungsgemäß vorgeschlagene Seitenkanalverdichter 1 zu entnehmen.

Der Seitenkanalverdichter 1 weist dabei ein Verdichterrad 2 auf, das insbesondere als geschlossenes scheibenartiges Verdichterrad 2 ausgebildet ist und um die horizontal verlaufenden Drehachse 4 drehbar in einem Gehäuse 3 gelagert ist. Dabei dient ein Antrieb 6, insbesondere ein elektrischer Antrieb 6, als Drehantrieb 6 des Verdichterrads 2. Der Antrieb 6 ist dabei insbesondere als ein Axialfeld-Elektromotor 6 ausgeführt, wobei dieser einen Stator 12 und einen Rotor 10 aufweist, wobei der Stator 12 und der Rotor 10 scheibenförmig umlaufend um die Drehachse 4 ausgebildet sind und wobei der Stator 12 in Richtung der Drehachse 4 neben dem Rotor 10 angeordnet ist. Dabei bildet sich ein scheibenförmig um die Drehachse 4 umlaufender Luftspalt 9 zwischen dem Stator 12 und dem Rotor 10 derart aus, dass der Luftspalt 9 nur in der einen Richtung der Drehachse 4 vom Stator 12 und in der anderen Richtung der Drehachse 4 vom Rotor 10 begrenzt wird. Des Weiteren ist der scheibenförmige Rotor 10 axial zur Drehachse 4 neben dem Verdichterrad 2 angeordnet, insbesondere an einer Naben-Scheibe 13 des Verdichterrads 2, wobei der Rotor 10 kraftschlüssig und/oder formschlüssig und/oder stoffschlüssig mit dem Verdichterrad 2 verbunden ist. Des Weiteren kann der Stator 12 Kühlkanale, insbesondere in Richtung der Drehachse 4 verlaufende Kühlkanäle, aufweisen, um eine Erwärmung des Stators 12 beim Betrieb zu verringern, insbesondere bei einem Betrieb mit einer hohen Drehzahl des Verdichterrads und/oder einem Betriebszustand des Stators 12, bei dem dieser ein hohes Maß an Verlustleistung und Verlustwärme produziert. Der Stator kann zudem einen Magneten und/oder die magnetischen Bauteile aufweisen, insbesondere einen Permanentmagneten. Durch die Magentische Wirkung des Permanentmagneten auf den Rotor und/oder auf das Verdichterrad steht das Lager permanent unter Vorspannung, auch bei einem ausgeschalteten Axialfeld-Elektromotor. Dabei kann das Verdichterrad und/oder der Rotor Permanentmagnete aufweisen, die mit dem Magneten des Stators derart interagieren, dass das Verdichterrad zum Stator in Richtung der Drehachse angezogen wird.

Das Gehäuse 3 umfasst ein Gehäuse-Oberteil 7 und ein Gehäuse-Unterteil 8, die miteinander verbunden sind. Zusätzlich kann mindestens ein Dichtelement, insbesondere ein um die Drehachse 4 umlaufendes Dichtelement, zwischen dem Gehäuse-Oberteil 7 und dem Gehäuse-Unterteil 8 angeordnet sein, um zum einen eine verbesserte Kapselung gegen das Eindringen von Feuchtigkeit und/oder Verschmutzung von außen zu bewirken. Zum anderen wird aber auch eine verbesserte Kapselung gegen den Verlust des zu fördernden Mediums erzielt, um ein Entweichen des zu fördernden Mediums an die Umgebung zu verhindern.

Weiterhin ist in **Fig.** 1 gezeigt, dass der scheibenförmige Rotor 10 einen in Richtung der Drehachse 4 verlaufenden zylindrischen Ansatz 29 aufweist, wobei der zylindrische Ansatz 29 auf der dem Stator 12 abgewandten Seite des Rotors 10 angeordnet ist und wobei die Mantelfläche des Außendurchmessers des zylindrischen Ansatzes 29 umlaufend um die Drehachse 4 verläuft. Des Weiteren steht der zylindrische Ansatz 29 an seinem Innendurchmesser mit einem Außendurchmesser eines Lagers 27 und an seinem Außendurchmesser mit dem Innendurchmesser des Verdichterrads 2, insbesondere mit der Naben-Scheibe 13 des Verdichterrads 2, in Kontakt, wobei der Kontakt des zylindrischen Ansatzes 29 zum Lager 27 und/oder zum Verdichterrad 2 insbesondere kraftschlüssig mittels eines Pressverbands erfolgt. Weiterhin weist das Gehäuse-Unterteil 8 einen zylindrischen Lagerzapfen 36 auf, wobei der Lagerzapfen 36 derart in Richtung der Drehachse 4 verläuft, dass seine Mantelfläche umlaufend um die Drehachse 4 verläuft und wobei das Lager 27, das insbesondere als ein Rillenkugellager 27 ausgeführt ist, radial zur Drehachse 4 mit seinem Innendurchmesser mit der Mantelfläche des Lagerzapfens 36 in Kontakt steht.

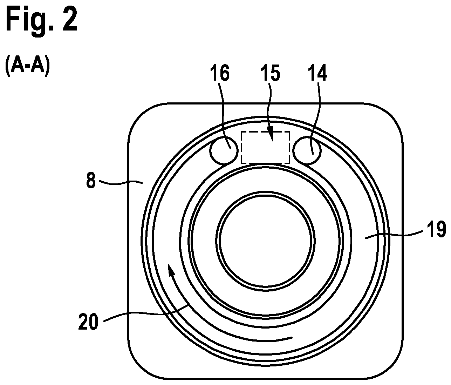

Des Weiteren bildet das Verdichterrad 2 eine sich außenseitig an die Naben-Scheibe 13 anschließende Förderzelle 28 aus. Diese Förderzelle 28 des Verdichterrads 2 verläuft umlaufend um die Drehachse 4 in einem umlaufenden Verdichterraum 30 des Gehäuses 3, wobei das Verdichterrad 2 und/oder die Förderzelle 28 am jeweiligen außenliegenden Umfang einen umlaufenden äußeren Begrenzungsring 11 aufweist, wobei insbesondere der äußere Begrenzungsring 11 die Förderzelle 28 an Ihrem äußeren um die Drehachse 4 umlaufenden Außendurchmesser begrenzt. Zudem weist das Verdichterrad 2 einen um die Drehachse 4 umlaufenden inneren Begrenzungsring 17 auf, wobei der innere Begrenzungsring 17 am Innendurchmesser des umlaufenden Verdichterraums 30 am Verdichterrad 2 ausgebildet ist und eine Trennung und/oder Kapselung des Verdichterraums 30 von einer inneren Region 32 des Seitenkanalverdichters 1 bewirkt. Der äußere Begrenzungsring 11 hingegen bewirkt eine Trennung und/oder Kapselung des Verdichterraums 30 von einer äußeren Region 34 des Seitenkanalverdichters 1. Das Verdichterrad 2 bildet zudem zur Beschleunigung und/oder Verdichtung des zu fördernden Mediums, wie beispielsweise Wasserstoff, umlaufend um die Drehachse 4, insbesondere im Bereich zwischen dem inneren Begrenzungsring 17 und dem äußeren Begrenzungsring 11 mehrere Schaufelblätter 5 aus. Dabei bildet das Verdichterrad 2 im Bereich des Verdichterraums 30 zwischen zwei benachbarten Schaufelblättern 5 jeweils die Förderzelle 28 aus, die radial zur Drehachse 4 nach innen durch den inneren umlaufenden Begrenzungsring 17 begrenzt ist. Das Gehäuse 3, insbesondere das Gehäuse-Oberteil 7 und/oder das Gehäuse-Unterteil 8, weist im Bereich des Verdichterraums 30 mindestens einen umlaufenden Seitenkanal 19 auf. Dabei verläuft der Seitenkanal 19 derart im Gehäuse 3 in Richtung der Drehachse 4, dass dieser axial zur Förderzelle 28 einseitig oder beidseitig verläuft. Der Seitenkanal 19 kann dabei zumindest in einem Teilbereich des Gehäuses 3 umlaufend um die Drehachse 4 verlaufen, wobei in dem Teilbereich, in dem der Seitenkanal 19 im Gehäuse 3 nicht ausgebildet ist, ein Unterbrecher-Bereich 15 im Gehäuse 3 ausgebildet ist (siehe **Fig.** 2).

Der in **Fig.** 1 gezeigte Axialfeld-Elektromotor 6 ist derart ausgebildet, dass der Stator 12 zumindest teilweise von einem topfförmigen Dichtelement 18 umschlossen wird, wobei das topfförmige Dichtelement 18 insbesondere als eine Kunstoffumspritzung 18 des Stators 12 ausgeführt ist, und wobei das Dichtelement 18 eine Kapselung der elektrischen Komponenten des Seitenkanalverdichters 1, insbesondere des Stators 12, vom Medium des Verdichterraums 30, insbesondere Wasserstoff, bewirkt. Zusätzlich kann eine Kapselung der elektrischen Komponenten gegen weitere Flüssigkeiten, wie beispielsweise Wasser bewirkt werden. Das topfförmige Dichtelement 18 kann dabei aus einem elastischen Material bestehen, wie beispielsweise einem Elastomer, wobei das Dichtelement 18 zusätzliche strukturverstärkende Materialien aufweisen kann. Durch die elastische Ausführung des Dichtelements 18 wird die kapselnde Wirkung verbessert, da sich das Dichtelement optimal an die umgebenden Bauteile des Seitenkanalverdichters 1 anlegen kann und/oder mit diesen in Anlage kommt.

Des Weiteren wird der Antrieb 6 von einem Antriebs-Gehäuse 24 umschlossen und somit gegen den Bereich außerhalb des Seitenkanalverdichters 1 gekapselt. Das Antriebs-Gehäuse 24 steht dabei mit dem Gehäuse 3, insbesondere dem Gehäuse-Oberteil 7 in Anlage, wobei das Antriebsgehäuse 24 beispielsweise durch einen ausgebildeten Absatz mindestens zwei axial zur Drehachse 4 verlaufende Anlageflächen mit dem Gehäuse 3 ausbildet und mindestens eine radial zur Drehachse 4 verlaufende Anlagefläche mit dem Gehäuse 3 ausbildet. Durch den Absatz ist zudem eine Ausrichtung und/oder Zentrierung des Antriebs-Gehäuses 24 zum Gehäuse 3 möglich, insbesondere bei der Montage. Zusätzlich kann mindestens ein Dichtelement, insbesondere ein um die Drehachse 4 umlaufendes Dichtelement, zwischen dem Antriebs-Gehäuse 24 und dem Gehäuse 3 angeordnet sein, wobei es sich bei dem mindestens einen Dichtelement beispielsweise um einen O-Ring handelt. Das Antriebs-Gehäuse 24 kann darüber hinaus an seiner Oberfläche Kühlrippen 33 aufweisen, die eine verbesserte Abführung der Wärmeenergie in die Umgebung bewirken. Wärme tritt im Antrieb 6 derart auf, dass durch das Antreiben des Verdichterrads 2 überschüssige Wärmeenergie entsteht, die insbesondere als Reibungswärme oder induktiv magnetische Wärme vorliegt. Diese Wärme kann aufgrund der Kühlrippen 33 des Antriebs 6 schneller an die Umgebung abgeführt werden, da der Antrieb 6 durch die Kühlrippen 33 eine vergrößerte Oberfläche aufweist.

Weiterhin bildet das Gehäuse 3, insbesondere das Gehäuse-Unterteil 8, eine Gas-Einlassöffnung 14 und eine Gas-Auslassöffnung 16 aus. Dabei sind die Gas-Einlassöffnung 14 und die Gas-Auslassöffnung 16, insbesondere über den mindestens einen Seitenkanal 19, fluidisch miteinander verbunden. Vom Antrieb 6 wird ein Drehmoment über den Rotor 10 auf das Verdichterrad 2 übertragen. Dabei wird das Verdichterrad 2 in Rotationsbewegung versetzt und die Förderzelle 28 bewegt sich in einer Rotationsbewegung umlaufend um die Drehachse 4 durch den Verdichterraum 30 im Gehäuse 3 in Richtung einer Drehrichtung 20 (siehe **Fig.** 2). Dabei wird ein schon im Verdichterraum 30 befindliches gasförmiges Medium durch die Förderzelle 28 mitbewegt und dabei gefördert und/oder verdichtet. Zudem findet eine Bewegung des gasförmigen Mediums, insbesondere ein Strömungsaustausch, zwischen der Förderzelle 28 und dem mindestens einen Seitenkanal 19 statt. Des Weiteren strömt das gasförmige Medium, bei dem es sich insbesondere um ein unverbrauchte Rezirkulationsmedium aus einer Brennstoffzelle handelt, über die Gas-Einlassöffnung 14 in den

Verdichterraum 30 des Seitenkanalverdichters 1 ein und/oder wird dem Seitenkanalverdichter 1 zugeführt und/oder wird aus dem Bereich, der der Gas-Einlassöffnung 14 vorgelagert ist, angesaugt. Dabei wird das gasförmige Medium nach erfolgtem Durchlauf durch die Gas-Auslassöffnung 16 des Seitenkanalverdichters 1 abgeleitet und strömt insbesondere zu einer Strahlpumpe eines Brennstoffzellensystems.

Der Rotor 10 weist ist in einer beispielhaften Ausführungsform mindestens einen Magneten, insbesondere einen Permanentmagneten auf, während der Stator 12 als ein Spulenkörper 12 ausgeführt ist und/oder wobei der Stator 12 auch mindestens einen Magneten, insbesondere einen Permanentmagneten aufweist. Der Spulenkörper 12 kann dabei eine unterschiedliche Anzahl an Wicklungen enthalten, wobei es sich bei den Wicklungen insbesondere um räumlich versetzte Windungsschleifen handelt, die beispielsweise aus Kupfer bestehen. Zudem kann der Stator 12 eine Kühlung aufweisen, um die Temperatur bei einem hochfrequenten Dauerbetrieb des Seitenkanalverdichters 1 kontrollieren und/oder senken zu können. Durch die Ausführung des Antriebs 6 als Axialfeld-Elektromotor 6 lässt sich eine kompakte Bauform des Antriebs 6 und des Seitenkanalverdichters 1 erreichen. Aufgrund des mindestens einen Permanentmagneten wird der Rotor 10 dauerhaft und permanent, insbesondere bei einer abgeschalteten Bestromung des Stators 12, in Richtung der Drehachse 4 zum Stator 12 hin, insbesondere mittels einer Axialkraft 21, angezogen, insbesondere aufgrund einer Magnetkraft. Dabei wird das Lager 27 mit einer axialen Vorspannung beaufschlagt, wodurch das Rillenkugellager 27 als Axiallager und/oder als Radiallager dient. Somit wird bei einer Bestromung des Stators 12 die Axialkraft 21 auf den Rotor 10 in Richtung der Drehachse 4 erzeugt, wodurch eine axiale Vorspannung des Lagers 27, insbesondere des Rillenkugellagers 27, zumindest mittelbar über den Rotor 10 erzielt wird. In einer weiteren beispielhaften Ausführungsform kann die Axialkraft 21 den Rotor 10 axial zur Drehachse 4 vom Stator 12 wegdrücken mittels der Axialkraft 21, wobei auch eine Vorspannung des Lagers 27 bewirkt wird.

**Fig.** 2 zeigt einen in **Fig.** 1 mit A-A bezeichneten Schnitt des Seitenkanalverdichters 1 in vergrößerter Darstellung bei dem das Gehäuse-Unterteil 8, die Gas-Einlassöffnung 14, die Gas-Auslassöffnung 16, der Unterbrecher-Bereich 15, der Seitenkanal 19, die Drehrichtung 20 (des nicht dargestellten Verdichterrads 2) und das erste umlaufende Dichtelement 29 dargestellt sind.

Wie in **Fig.** 2 dargestellt befindet sich der Unterbrecher-Bereich 15 umlaufend um die Drehachse 4 im Gehäuse 3 insbesondere zwischen der Gas-Einlassöffnung 14 und der Gas-Auslassöffnung 16. Das gasförmige Medium wird durch das Verdichterrad 2 gefördert und/oder strömt dabei von der Gas-Einlassöffnung 14 zur Gas-Auslassöffnung 16 und durchströmt dabei, zumindest teilweise, den Seitenkanal 19. Dabei erhöht sich mit fortschreitendem Umlauf von der Gas-Einlassöffnung 14 zur Gas-Auslassöffnung 16 in Drehrichtung 20 die Verdichtung und/oder der Druck und/oder die Strömungsgeschwindigkeit des gasförmigen Mediums in der Förderzelle 28 des Verdichterrads 2 und im Seitenkanal 19. Durch den Unterbrecher-Bereich 15 wird eine Trennung einer Druckseite und einer Saugseite bewirkt, wobei sich die Saugseite im Bereich der Gas-Einlassöffnung 14 befindet und die Druckseite im Bereich der Gas-Auslassöffnung 16 befindet.

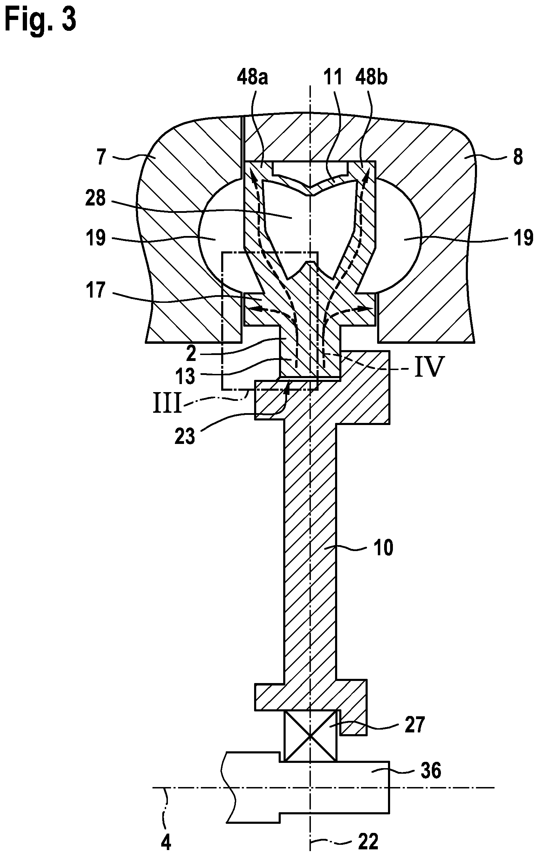

In **Fig.** 3 ist ein in Figur 1 mit II bezeichneten Ausschnitt des Seitenkanalverdichters in vergrößerter Darstellung gemäß einem zweiten, nicht erfindungsgemäßen Ausführungsbeispiel gezeigt. Gemäß dem zweiten Ausführungsbeispiel ist dabei der Rotor 10 radial zur Drehachse 4 nahezu vollständig im Bereich des Innendurchmessers des Verdichterrads 2 angeordnet, so dass eine Symmetrieachse 22 des scheibenförmigen Rotors 10 nahezu deckungsgleich mit der Symmetrieachse 22 des Verdichterrads 2 verläuft. Weiterhin steht dabei der Rotor 10 mit einem Außendurchmesser des Lagers 27 und einem Innendurchmesser des Verdichterrads 2 in Kontakt, wobei der Rotor 10 in einem axial zur Drehachse 4 verlaufenden Fügebereich 23 mit dem Verdichterrad 2 einen Kontaktbereich ausbildet.

Das Verdichterrad 2 weist darüber hinaus im Bereich des äußeren Begrenzungsrings 11 mindestens einen außenliegenden umlaufenden Ringbund 48a, b auf, der insbesondere radial zur Drehachse 4 verläuft. Zudem verläuft der mindestens eine umlaufende Ringbund 48a, b auf der der Drehachse 4 abgewandten Seite des äußeren Begrenzungsrings 11. Dabei wird der mindestens eine Seitenkanal 19 im Gehäuse 3 des Seitenkanalverdichters 1 nach außen durch den äußeren Begrenzungsring 11 und/oder den mindestens einen umlaufenden Ringbund 48a, b begrenzt. Weiterhin wird der mindestens eine Seitenkanal 19 im Gehäuse 3 des Seitenkanalverdichters 1 nach innen durch den inneren Begrenzungsring 17 begrenzt. Indem das Verdichterrad mit dem mindestens eine außenliegenden umlaufenden Ringbund 48a, b und/oder inneren Begrenzungsrings 17 mit dem Gehäuse-Oberteil 7 und/oder dem Gehäuse-Unterteil 8 zumindest über ein Zwischenmedium, insbesondere das zu fördernde Medium, in Anlage steht kann
eine verbesserte Führung des Verdichterrads 2 im Bereich der Förderzellen 28 erzielt werden. Das Medium bildet dabei einen Restspalt zwischen dem Verdichterrad 2 und dem Gehäuse 3 aus, wobei sich das Medium bei einem kleiner werdenden Restspalt verdichtet und dabei mittels eines erhöhten Drucks eine Kraft auf das Verdichterrad bewirkt, die zu einer verbesserten Führung des Verdichterrads in Rotationsrichtung beiträgt. Das Prinzip ähnelt dem Prinzip eines Luftkissens insbesondere zur Dämpfung und/oder zur Erbringung einer Gegenkraft. Dies ist insbesondere vorteilhaft bei starken Stößen und Schlägen während des Betriebs des Seitenkanalverdichters 1 beispielsweise aufgrund von Druckspitzen oder auftretendem Staudruck im Brennstoffzellensystem, wodurch beispielsweise die Lebensdauer des Seitenkanalverdichters erhöht werden kann. Dadurch kann die Belastung des Lagers 27 und/oder des Antriebs 6 reduziert werden.

Weiterhin ist die Flussrichtung IV der Wärme aus dem beheizten Rotor 10, insbesondere bei einer Kaltstartprozedur, in **Fig.** 3 gezeigt. Im Rahmen dieses Verfahrens zum Kaltstart des Seitenkanalverdichters 1, bei dem ein Anfahren des Seitenkanalverdichters 1 nach längeren Standzeiten und/oder tiefen Umgebungstemperaturen erfolgt, erfolgt ein Erwärmen des Rotors 10 und des Verdichterrads 2 in den dem Gehäuse 3 zugewandten Bereichen. Dabei erfolgt eine Bestromung des Stators 12, ohne dass sich ein Drehfeld zwischen dem Stator 12 und dem Rotor 10 aufbaut und sich somit keine oder eine sehr geringe Drehbewegung des Rotors 10 um die Drehachse 4 einstellt. Mittels der Bestromung des Stators 12 wird eine induktive Erwärmung des Rotors 10 bewirkt, wobei ein Wärmeenergieübertrag vom Rotor 10 auf das Verdichterrad 2 erfolgt und wobei sich die Wärme aus dem Rotor 10 in einer Flussrichtung IV in den Bereich der axialen Enden des inneren Begrenzungsrings 17 und des mindestens eines außenliegenden Ringbunds 48 des Verdichterrads 2 ausbreitet. Dabei heizen sich die Bereiche des Verdichterrads 2, Ringbund 48a, b und innerer Begrenzungsring 17, auf, die ein geringes Spaltmaß, zum Gehäuse 3 ausbilden.

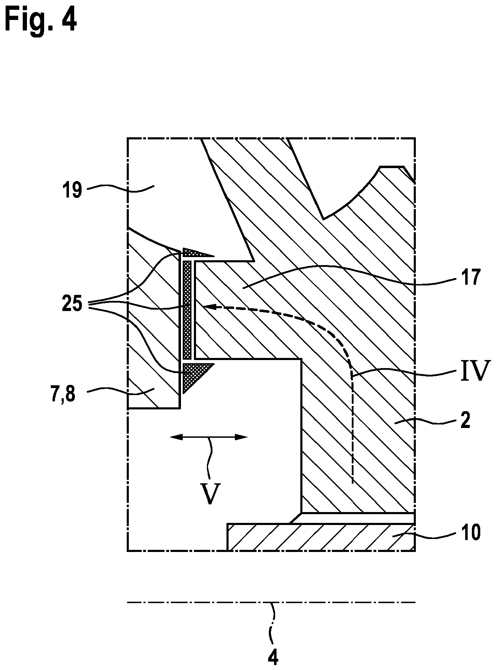

**Fig.** 4 zeigt einen in Figur 3 mit III bezeichneten Ausschnitt des Verdichterrads 2, des Gehäuses 3 und des Rotors 10 gemäß dem zweiten Ausführungsbeispiel. Dabei ist insbesondere der Bereich des Verdichterrads 2 gezeigt, der dem Gehäuse 3 zugewandt ist und der ein geringes Spaltmaß mit dem Gehäuse 3 ausbildet. In dem in Fig. 4 beispielhaft gezeigten Ausschnitt ist dies ein Teil des inneren Begrenzungsrings 17 der dem Gehäuse 3 axial zur Drehachse 4 zugewandt ist, es kann sich aber auch um den mindestens einen außenliegenden Ringbund 48 handeln, der dem Gehäuse 3 axial und/oder radial zur Drehachse zugewandt sein kann.

Bei einem Abschalten und/oder Stillstand des Seitenkanalverdichters 1 und oder des Fahrzeugs kann der Effekt eintreten, dass sich in den Bereichen zwischen dem Verdichterrad 2 und dem Gehäuse 3, die ein geringes Spaltmaß ausbilden, Flüssigkeit aus dem zu fördernden Medium des Seitenkanalverdichters 1 sammelt. Bei dieser Flüssigkeit kann es sich insbesondere um Wasser handeln. Die Flüssigkeit sammelt sich aufgrund von Kapillareffekten insbesondere in den Bereichen mit einem geringen Spaltmaß zwischen dem Verdichterrad 2 und dem Gehäuse 3. Mittels des Kapillareffekts und/oder einer sogenannten Kapillarität sammelt sich die Flüssigkeit bei Kontakt mit Spalten oder Hohlräumen in diesen Bereichen, insbesondere wenn diese einen geringen Abstand voneinander haben. Diese Effekte werden durch die Oberflächenspannung von Flüssigkeiten selbst und die Grenzflächenspannung zwischen Flüssigkeiten und der festen Oberfläche hervorgerufen. Aufgrund von niedrigen Umgebungstemperaturen kann nun diese Flüssigkeit derart Abkühlen, das ein zumindest teilweise Übergang des Aggregatzustandes von flüssig zu fest auftritt. Im beispielhaften Fall, bei dem es sich bei der Flüssigkeit um Wasser handelt, können sich dabei Wasserkristalle und sogenannte Eisbrücken 25 zwischen den Bauteilen ausbilden. Diese Eisbrücken 25 können dazu führen, dass eine Rotation des Verdichterrads 2 im Gehäuse 3 verhindert wird, da durch die Eisbrücken 25 ein Halten des Verdichterrads 2 im Gehäuse 3 bewirkt wird. Dies kann zu einem Gesamtausfall des Seitenkanalverdichters 2 und somit des Brennstoffzellensystems führen, wodurch sich beispielsweisen ein Brennstoffzellenfahrzeug nicht mehr starten lassen könnte. Weiterhin könnten bei einem Losbrechen des Verdichterrads ohne vorheriges Schmelzen der Eisbrücken 25 Eiskristalle abrechen und in die nachgelagerten Komponenten des Brennstoffzellensystems gelangen, wobei die Eiskristalle aufgrund Ihrer Oberflächenstruktur diese Komponenten schädigen könnten.

Um diese Beschädigung zur Verhindern, und um eine Rotation des Verdichterrads 2 bei niedrigen Temperaturen zu gewährleisten wird ein Verfahren zum Schmelzen die Eisbrücken 25 vorgeschlagen. Dabei werden die Eisbrücken 25 mit Wärmeenergie beaufschlagt und wechseln zu einem flüssigen Aggregatzustand. Um dies zu erreichen wird ein Verfahren zum Start, insbesondere Kaltstart und/oder Abschalten des Seitenkanalverdichters vorgeschlagen. Bei diesem Verfahren erfolgt eine derartige Bestromung des Stators 12, ohne dass sich ein

Drehfeld zwischen dem Stator 12 und dem Rotor 10 aufbaut und sich somit keine oder eine sehr geringe Drehbewegung des Rotors 10 um die Drehachse 4 einstellt. Nahezu die gesamte elektrische Energie, die in den Stator 12 eingeleitet wird, wird in den Rotor 10, insbesondere den Permanentmagneten 10, mittels magnetischer Induktion übertragen, wobei diese Energie jedoch nur zu einem geringen Teil in kinetische Energie zum Beschleunigen des Rotors 10 und/oder des Verdichterrads 2 und zur Erzeugung einer Rotationsbewegung des Rotors 10 und/oder des Verdichterrads 2 verwendet wird. Dabei bewirkt die Bestromung des Stators 12 eine induktive Erwärmung des Rotors 10, wobei ein Wärmeenergieübertrag vom Rotor 10 auf das Verdichterrad 2 erfolgt und wobei sich die Wärme aus dem Rotor 10 in einer Flussrichtung IV in den Bereich der axialen Enden des inneren Begrenzungsrings 17 und des mindestens eines außenliegenden Ringbunds 48 des Verdichterrads 2 ausbreitet. Ein Großteil der in den Stator 12 eingeleiteten elektrischen Energie wird somit in Wärmeenergie umgewandelt und dient zur Erwärmung des Rotors 10.

Dadurch lässt sich das Verdichterrad 2 wieder in eine Rotationsbewegung versetzen. Die Flüssigkeit, die nach dem Abschmelzen der Eisbrücken 25 im Seitenkanalverdichter 2 entsteht kann nun abgeführt werden, beispielsweise mittels eines im Brennstoffzellensystem vorhandenen Purgeventil und/oder Ablassventil. Auf diese Weise kann die Lebensdauer des Seitenkanalverdichters 1 und/oder des Brennstoffzellensystems erhöht werden.

Weiterhin wird aufgrund der vorteilhaften Ausbildung des Seitenkanalverdichters 1 ein Verfahren vorgeschlagen, bei dem die Eisbrücken 25 aufgrund von mechanischen Kräften verhindert und/oder zerstört werden können. Bei diesem Verfahren erfolgt eine Bestromung des Stators 12 wodurch die Axialkraft 21 auf den Rotor 10 in Richtung der Drehachse 4 bewirkt wird. Indem sich der Rotor 10 und mit dem Rotor 10 das Verdichterrad 2 in Richtung der Drehachse 4 bewegt, wobei durch ein Variieren und/oder umkehren der elektrischen Bestromungsleistung eine Rüttelbewegung V bewirkt wird, bei dem sich die die Spaltmaße zwischen dem Verdichterrad 2 und dem Gehäuse 3 im Rahmen der Rüttelbewegung V des Rotors 10 und des Verdichterrads 2 vergrößern und verkleinern. Somit wird durch die Rüttelbewegung V des Rotors 10 eine wechselnde Zu- und Abnahme des in Richtung der Drehachse 4 verlaufenden Abstands zwischen dem Verdichterrad 2 und dem Gehäuse-Oberteil 7 und/oder dem Gehäuse-Unterteil 8 bewirkt, insbesondere im Bereich der axialen Enden des inneren Begrenzungsrings 17 und des mindestens eines außenliegenden Ringbunds 48 des Verdichterrads 2.

Durch diese Rüttelbewegung V und Abstandsänderung des Verdichterrads 2 zum Gehäuse-Oberteil 7 und/oder dem Gehäuse-Unterteil 8 werden die Eisbrücken 25, die sich radial und axial am inneren Begrenzungsring 17 gebildet haben und mit dem Gehäuse-Oberteil 7 und/oder dem Gehäuse-Unterteil 8 in Kontakt stehen zerstört, wie in **Fig.** 4 gezeigt. Des Weiteren werden durch diese Rüttelbewegung V und Abstandsänderung des Verdichterrads 2 zum Gehäuse-Oberteil 7 und/oder dem Gehäuse-Unterteil 8 die Eisbrücken 25, die sich radial und axial an den mindestens einem Ringbund 48 gebildet haben und mit dem Gehäuse-Oberteil 7 und/oder dem Gehäuse-Unterteil 8 in Kontakt stehen zerstört.

Die Erfindung ist nicht auf die hier beschriebenen Ausführungsbeispiele und die darin hervorgehobenen Aspekte beschränkt. Vielmehr ist der Schutzbereich durch die nachfolgenden Ansprüche bestimmt.

## Patentansprüche

1. Seitenkanalverdichter (1) für ein Brennstoffzellensystem zur Förderung und/oder Verdichtung eines Gases, insbesondere Wasserstoff,
mit einem Gehäuse (3) und einem Antrieb (6), wobei das Gehäuse (3) ein Gehäuse-Oberteil (7) und ein Gehäuse-Unterteil (8) aufweist, mit einem in dem Gehäuse (3) umlaufend um eine Drehachse (4) verlaufenden Verdichterraum (30), der mindestens einen umlaufenden Seitenkanal (19) aufweist, mit einem in dem Gehäuse (3) befindlichen Verdichterrad (2), das drehbar um die Drehachse (4) angeordnet ist und durch den Antrieb (6) angetrieben wird, wobei das Verdichterrad (2) an seinem Umfang im Bereich des Verdichterraums (30) angeordnete Schaufelblätter (5) aufweist und mit jeweils einer am Gehäuse (3) ausgebildeten Gas-Einlassöffnung (14) und einer Gas-Auslassöffnung (16), die über den Verdichterraum (30), insbesondere den mindestens einen Seitenkanal (19), fluidisch miteinander verbunden sind, **wobeider** Antrieb (6) als ein Axialfeld-Elektromotor (6) ausgeführt ist, der einen Stator (12) und einen Rotor (10) aufweist, wobei der Stator (12) und der Rotor (10) scheibenförmig umlaufend um die Drehachse (4) ausgebildet sind und wobei der Stator (12) in Richtung der Drehachse (4) neben dem Rotor (10) angeordnet ist, **dadurch gekennzeichnet, dass** der scheibenförmige Rotor (10) einen in Richtung der Drehachse (4) verlaufenden zylindrischen Ansatz (29) aufweist, wobei der zylindrische Ansatz (29) auf der dem Stator (12) abgewandten Seite des Rotors (10) angeordnet ist und wobei die Mantelfläche des Außendurchmessers des zylindrischen Ansatzes (29) umlaufend um die Drehachse (4) verläuft und wobei der zylindrische Ansatz (29) an seinem Innendurchmesser mit einem Außendurchmesser eines Lagers (27) und an seinem Außendurchmesser mit dem Innendurchmesser des Verdichterrads (2), insbesondere mit der Naben-Scheibe (13) des Verdichterrads (2), in Kontakt steht, wobei der Kontakt des zylindrischen Ansatzes (29) zum Lager (27) und/oder zum Verdichterrad (2) insbesondere kraftschlüssig mittels eines Pressverbands erfolgt

2. Seitenkanalverdichter (1) gemäß Anspruch 1, **dadurch gekennzeichnet, dass** sich ein scheibenförmig um die Drehachse (4) umlaufender Luftspalt (9) zwischen dem Stator (12) und dem Rotor (10) derart ausbildet, dass der Luftspalt (9) nur in der einen Richtung der Drehachse (4) vom Stator (12) und in der anderen Richtung der Drehachse (4) vom Rotor (10) begrenzt wird.

3. Seitenkanalverdichter (1) gemäß Anspruch 1 oder 2, **dadurch gekennzeichnet, dass** der scheibenförmige Rotor (10) axial zur Drehachse (4) neben dem Verdichterrad (2) angeordnet ist, insbesondere an einer Naben-Scheibe (13) des Verdichterrads (2), wobei der Rotor (10) kraftschlüssig und/oder formschlüssig und/oder stoffschlüssig mit dem Verdichterrad (2) verbunden ist.

4. Seitenkanalverdichter (1) gemäß Anspruch 1, **dadurch gekennzeichnet, dass** das Verdichterrad (2) im Bereich des Verdichterraums (30) zwischen zwei benachbarten Schaufelblättern (5) jeweils eine Förderzelle (28) ausbildet, die radial zur Drehachse (4) nach außen durch einen äußeren umlaufenden Begrenzungsring (11) und nach innen durch einen inneren umlaufenden Begrenzungsring (17) begrenzt ist, wobei die Förderzelle (28) in Richtung der Drehachse (4) mindestens eine Öffnung aufweist, wobei der äußere und der innere Begrenzungsring (11, 17) jeweils rotationssymmetrisch zur Drehachse (4) verläuft.

5. Seitenkanalverdichter (1) gemäß Anspruch 1, **dadurch gekennzeichnet, dass** das Gehäuse-Unterteil (8) einen zylindrischen Lagerzapfen (36) aufweist, wobei der Lagerzapfen (36) derart in Richtung der Drehachse (4) verläuft, dass seine Mantelfläche umlaufend um die Drehachse (4) verläuft und wobei das Lager (27), das insbesondere als ein Rillenkugellager (27) ausgeführt ist, radial zur Drehachse (4) mit seinem Innendurchmesser mit der Mantelfläche des Lagerzapfens (36) in Kontakt steht.

6. Seitenkanalverdichter (1) gemäß Anspruch 1 oder 2 , **dadurch gekennzeichnet, dass** der Stator (12) zumindest teilweise von einem topfförmigen Dichtelement (18) umschlossen wird, wobei das topfförmige Dichtelement (18) insbesondere als eine Kunstoffumspritzung (18) des Stators (12) ausgeführt ist, und wobei das Dichtelement (18) eine Kapselung der elektrischen Komponenten des Seitenkanalverdichters (1), insbesondere des Stators (12), vom Medium des Verdichterraums (30), insbesondere Wasserstoff, bewirkt.

7. Seitenkanalverdichter (1) gemäß Anspruch 5, **dadurch gekennzeichnet, dass** das Verdichterrad (2) einen um die Drehachse (4) umlaufenden inneren Begrenzungsring (17) aufweist, wobei der innere Begrenzungsring (17) am Innendurchmesser des umlaufenden Verdichterraum (30) am Verdichterrad (2) ausgebildet ist und eine Trennung und/oder Kapselung des Verdichterraums (30) von einer inneren Region (32) des Seitenkanalverdichters (1) bewirkt.

8. Seitenkanalverdichter (1) gemäß Anspruch 4, **dadurch gekennzeichnet, dass** das Verdichterrad (2) im Bereich des äußeren Begrenzungsrings (11) mindestens einen außenliegenden umlaufenden Ringbund (48a, b) aufweist, der insbesondere radial zur Drehachse (4) verläuft, wobei der mindestens eine umlaufende Ringbund (48a, b) auf der der Drehachse (4) abgewandten Seite des äußeren Begrenzungsrings (11) verläuft.

9. Verfahren zum Start, insbesondere Kaltstart, und/oder Abschalten des Seitenkanalverdichters (1) gemäß einem der Ansprüche 1 bis 8, **dadurch gekennzeichnet, dass** eine Bestromung des Stators (12) erfolgt, ohne dass sich ein Drehfeld zwischen dem Stator (12) und dem Rotor (10) aufbaut und sich somit keine oder eine sehr geringe Drehbewegung des Rotors (10) um die Drehachse (4) einstellt.

10. Verfahren gemäß Anspruch 9, **dadurch gekennzeichnet, dass** die Bestromung des Stators (12) eine induktive Erwärmung des Rotors (10) bewirkt, wobei ein Wärmeenergieübertrag vom Rotor (10) auf das Verdichterrad (2) erfolgt und wobei sich die Wärme aus dem Rotor (10) in einer Flussrichtung IV in den Bereich der axialen Enden des inneren Begrenzungsrings (17) und des mindestens eines außenliegenden Ringbunds (48) des Verdichterrads (2) ausbreitet.

11. Verfahren gemäß Anspruch 9, **dadurch gekennzeichnet, dass** die Bestromung des Stators (12) die Axialkraft (21) auf den Rotor (10) in Richtung der Drehachse (4) bewirkt, wodurch sich der Rotor (10) in Richtung der Drehachse (4) bewegt, wobei durch ein Variieren und/oder umkehren der elektrischen Bestromungsleistung eine Rüttelbewegung V bewirkt wird.

12. Verfahren gemäß Anspruch 11, **dadurch gekennzeichnet, dass** die Rüttelbewegung V des Rotors (10) eine wechselnde Zu- und Abnahme des in Richtung der Drehachse (4) verlaufenden Abstands zwischen dem Verdichterrad (2) und dem Gehäuse-Oberteil (7) und/oder dem Gehäuse-Unterteil (8) bewirkt, insbesondere im Bereich der axialen Enden des inneren Begrenzungsrings (17) und des mindestens einen außenliegenden Ringbunds (48) des Verdichterrads (2).

## Claims

1. Side channel compressor (1) for a fuel cell system for conveying and/or compressing a gas, in particular hydrogen, having a housing (3) and a drive (6), wherein the housing (3) has a housing upper portion (7) and a housing lower portion (8), having a compressor chamber (30) which extends in the housing (3) circumferentially around a rotation axis (4) and which has at least one circumferential side channel (19), having a compressor wheel (2) which is located in the housing (3) and which is arranged so as to be able to rotate about the rotation axis (4) and which is driven by the drive (6), wherein the compressor wheel (2) has on the circumference thereof blades (5) which are arranged in the region of the compressor chamber (30), and having in each case a gas inlet opening (14) and a gas outlet opening (16) which are formed in the housing (3) and which are connected to each other in fluid terms by means of the compressor chamber (30), in particular the at least one side channel (19), wherein the drive (6) is constructed as an axial field electric motor (6), which has a stator (12) and a rotor (10), wherein the stator (12) and the rotor (10) are constructed so as to extend in a disc-like manner around the rotation axis (4) and wherein the stator (12) is arranged in the direction of the rotation axis (4) beside the rotor (10), **characterized in that** the disc-like rotor (10) has a cylindrical attachment (29) which extends in the direction of the rotation axis (4), wherein the cylindrical attachment (29) is arranged at the side of the rotor (10) facing away from the stator (12) and wherein the covering face of the outer diameter of the cylindrical attachment (29) extends circumferentially around the rotation axis (4), and wherein the cylindrical attachment (29) at the inner diameter thereof is in contact with an outer diameter of a bearing (27) and at the outer diameter thereof with the inner diameter of the compressor wheel (2), in particular with the hub disc (13) of the compressor wheel (2), wherein the contact of the cylindrical attachment (29) with respect to the bearing (27) and/or the compressor wheel (2) is carried out in particular in a non-positive-locking manner by means of an interference fit.

2. Side channel compressor (1) according to Claim 1, **characterized in that** an air gap (9) which extends in a disc-like manner around the rotation axis (4) is formed between the stator (12) and the rotor (10) in such a manner that the air gap (9) is delimited in only one direction of the rotation axis (4) by the stator (12) and in the other direction of the rotation axis (4) by the rotor (10).

3. Side channel compressor (1) according to Claim 1 or 2, **characterized in that** the disc-like rotor (10) is arranged axially with respect to the rotation axis (4) beside the compressor wheel (2), in particular on a hub disc (13) of the compressor wheel (2), wherein the rotor (10) is connected in a non-positive-locking and/or positive-locking and/or materially engaging manner to the compressor wheel (2) .

4. Side channel compressor (1) according to Claim 1, **characterized in that** the compressor wheel (2) forms in the region of the compressor chamber (30) between two adjacent blades (5) in each case a conveyor cell (28) which is delimited radially outward with respect to the rotation axis (4) by an external circumferential delimiting ring (11) and inward by an internal circumferential delimiting ring (17), wherein the conveyor cell (28) has at least one opening in the direction of the rotation axis (4), wherein the external and the internal delimiting ring (11, 17) extend in each case in a rotationally symmetrical manner with respect to the rotation axis (4) .

5. Side channel compressor (1) according to Claim 1, **characterized in that** the housing lower portion (8) has a cylindrical bearing pin (36), wherein the bearing pin (36) extends in such a manner in the direction of the rotation axis (4) that the covering face thereof extends circumferentially around the rotation axis (4) and wherein the bearing (27), which is constructed in particular as a deep groove ball bearing (27), is in contact with the inner diameter thereof with the covering face of the bearing pin (36) radially with respect to the rotation axis (4).

6. Side channel compressor (1) according to Claim 1 or 2, **characterized in that** the stator (12) is at least partially surrounded by a pot-like sealing element (18), wherein the pot-like sealing element (18) is in particular constructed as a plastics material overmoulding (18) of the stator (12), and wherein the sealing element (18) brings about an encapsulation of the electrical components of the side channel compressor (1), in particular the stator (12), by the medium of the compressor chamber (30), in particular hydrogen.

7. Side channel compressor (1) according to Claim 5, **characterized in that** the compressor wheel (2) has an internal delimiting ring (17) which extends around the rotation axis (4), wherein the internal delimiting ring (17) is formed on the inner diameter of the circumferential compressor chamber (30) on the compressor wheel (2), and brings about a separation and/or encapsulation of the compressor chamber (30) from an inner region (32) of the side channel compressor (1).

8. Side channel compressor (1) according to Claim 1, **characterized in that** the compressor wheel (2) has in the region of the external delimiting ring (11) at least one external circumferential annular collar (48a, b) which in particular extends radially with respect to the rotation axis (4), wherein the at least one circumferential annular collar (48a, b) extends at the side of the external delimiting ring (11) facing away from the rotation axis (4).

9. Method for starting, in particular cold-starting, and/or switching off the side channel compressor (1) according to one of Claims 1 to 8, **characterized in that** power is supplied to the stator (12) without a rotary field being formed between the stator (12) and the rotor (10) and consequently no or a very small rotational movement of the rotor (10) about the rotation axis (4) being produced.

10. Method according to Claim 9, **characterized in that** the power supply of the stator (12) brings about an inductive heating of the rotor (10), wherein a transfer of thermal energy from the rotor (10) to the compressor wheel (2) is carried out and wherein the heat from the rotor (10) spreads in a flow direction IV into the region of the axial ends of the internal delimiting ring (17) and the at least one external annular collar (48) of the compressor wheel (2).

11. Method according to Claim 9, **characterized in that** the application of power to the stator (12) brings about the axial force (21) on the rotor (10) in the direction of the rotation axis (4), whereby the rotor (10) moves in the direction of the rotation axis (4), wherein a shaking movement V is brought about as a result of a variation and/or reversal of the electrical power supply.

12. Method according to Claim 11, **characterized in that** the shaking movement V of the rotor (10) brings about a changing increase and decrease of the spacing which extends in the direction of the rotation axis (4) between the compressor wheel (2) and the housing upper portion (7) and/or the housing lower portion (8), in particular in the region of the axial ends of the internal delimiting ring (17) and the at least one external annular collar (48) of the compressor wheel (2).

## Revendications

1. Compresseur à canal latéral (1) destiné à un système de pile à combustible pour transporter et/ou comprimer un gaz, en particulier de l'hydrogène, ledit compresseur à canal latéral comprenant un boîtier (3) et un entraînement (6), le boîtier (3) étant pourvu d'une partie de boîtier supérieure (7) et d'une partie de boîtier inférieure (8), une chambre de compresseur (30) qui s'étend dans le boîtier (3) circonférentiellement autour d'un axe de rotation (4) et qui est pourvue d'au moins un canal latéral circonférentiel (19), une roue de compresseur (2) qui est située dans le boîtier (3), qui est disposée de manière à pouvoir tourner sur l'axe de rotation (4) et qui est entraînée par l'entraînement (6), la roue de compresseur (2) comportant des aubes (5) qui sont disposées sur sa circonférence dans la région de la chambre de compresseur (30) et qui sont pourvues chacune d'une ouverture d'entrée de gaz (14), ménagée au niveau du boîtier (3), et d'une ouverture de sortie de gaz (16), lesquelles ouvertures sont reliées fluidiquement entre elles par le biais de la chambre de compresseur (30), en particulier de l'au moins un canal latéral (19), l'entraînement (6) étant réalisé sous la forme d'un moteur électrique à champ axial (6) qui comporte un stator (12) et un rotor (10), le stator (12) et le rotor (10) étant conçus sous la forme d'un disque s'étendant autour de l'axe de rotation (4) et le stator (12) étant disposé à côté du rotor (10) dans la direction de l'axe de rotation (4), **caractérisé en ce que** le rotor en forme de disque (10) comporte une extension cylindrique (29) qui s'étend dans la direction de l'axe de rotation (4), l'extension cylindrique (29) étant disposée sur le côté du rotor (10) qui est à l'opposé du stator (12) et la surface latérale du diamètre extérieur de l'extension cylindrique (29) s'étendant circonférentiellement autour de l'axe de rotation (4) et l'extension cylindrique (29) étant en contact par son diamètre intérieur avec un diamètre extérieur d'un palier (27) et par son diamètre extérieur avec le diamètre intérieur de la roue de compresseur (2), notamment avec le disque de moyeu (13) de la roue de compresseur (2), le contact de l'extension cylindrique (29) avec le palier (27) et/ou avec la roue de compresseur (2) étant effectué notamment en force au moyen d'un ajustement serré.

2. Compresseur à canal latéral (1) selon la revendication 1, **caractérisé en ce qu'**un entrefer (9), qui s'étend en forme de disque autour de l'axe de rotation (4), est ménagé entre le stator (12) et le rotor (10) de manière que l'entrefer (9) ne soit délimité par le stator (12) que dans un sens de l'axe de rotation (4) et par le rotor (10) que dans l'autre sens de l'axe de rotation (4).

3. Compresseur à canal latéral (1) selon la revendication 1 ou 2, **caractérisé en ce que** le rotor en forme de disque (10) est disposé axialement par rapport à l'axe de rotation (4) à côté de la roue de compresseur (2), notamment au niveau d'un disque de moyeu (13) de la roue de compresseur (2), le rotor (10) étant relié à la roue de compresseur (2) par une liaison en force et/ou une liaison par complémentarité de formes et/ou par une liaison de matière.

4. Compresseur à canal latéral (1) selon la revendication 1, **caractérisé en ce que** la roue de compresseur (2) forme, au niveau de la chambre de compresseur (30) à chaque fois entre deux aubes adjacentes (5), une cellule de refoulement (28) qui est délimitée radialement à la l'axe de rotation (4) vers l'extérieur par une bague de délimitation circonférentielle extérieure (11) et vers l'intérieur par une bague de délimitation circonférentielle intérieure (17), la cellule de transport (28) comportant au moins une ouverture dans la direction de l'axe de rotation (4), les bagues de limitation extérieure et intérieure (11, 17) s'étendant chacune à symétrie de rotation par rapport à l'axe de rotation (4) .

5. Compresseur à canal latéral (1) selon la revendication 1, **caractérisé en ce que** la partie de boîtier inférieure (8) comporte un tourillon cylindrique (36), le tourillon (36) s'étendant dans la direction de l'axe de rotation (4) de manière que sa surface latérale s'étende circonférentiellement autour de l'axe de rotation (4) et le palier (27), qui est réalisé en particulier sous la forme d'un roulement à billes rainuré (27), étant en contact par son diamètre intérieur avec la surface latérale du tourillon (36) radialement à l'axe de rotation (4).

6. Compresseur à canal latéral (1) selon la revendication 1 ou 2, **caractérisé en ce que** le stator (12) est au moins partiellement entouré par un élément d'étanchéité en forme de pot (18), l'élément d'étanchéité en forme de pot (18) étant conçu en particulier comme un surmoulage en matière synthétique (18) du stator (12), et l'élément d'étanchéité (18) réalisant une encapsulation des composants électriques du compresseur à canal latéral (1), en particulier du stator (12), par le milieu de la chambre de compresseur (30), en particulier l'hydrogène.

7. Compresseur à canal latéral (1) selon la revendication 5, **caractérisé en ce que** la roue de compresseur (2) comporte une bague de limitation intérieure (17) qui s'étend autour de l'axe de rotation (4), la bague de délimitation intérieure (17) étant formée au niveau du diamètre intérieur de la chambre de compresseur circonférentielle (30) au niveau de la roue de compresseur (2) et réalisant une séparation et/ou une encapsulation de la chambre de compresseur (30) par une région intérieure (32) du compresseur à canal latéral (1).

8. Compresseur à canal latéral (1) selon la revendication 4, **caractérisé en ce que** la roue de compresseur (2) comporte dans la région de la bague de délimitation extérieure (11) au moins un collet annulaire circonférentiel extérieur (48a, b) qui s'étend notamment radialement à l'axe de rotation (4), l'au moins un collet annulaire circonférentiel (48a, b) s'étendant sur le côté de la bague de délimitation extérieure (11) qui est à l'opposé de l'axe de rotation (4) .

9. Procédé de démarrage, notamment de démarrage à froid, et/ou d'arrêt du compresseur à canal latéral (1) selon l'une des revendications 1 à 8, **caractérisé en ce que** l'alimentation en courant du stator (12) est effectuée sans avoir à établir un champ tournant entre le stator (12) et le rotor (10) et ainsi sans avoir à régler, ou dans une très faible mesure, un mouvement de rotation du rotor (10) autour de l'axe de rotation (4).

10. Procédé selon la revendication 9, **caractérisé en ce que** l'alimentation en courant du stator (12) provoque un échauffement inductif du rotor (10), un transfert d'énergie thermique étant effectué du rotor (10) à la roue de compresseur (2) et la chaleur se propageant hors du rotor (10) dans une direction d'écoulement IV dans la zone des extrémités axiales de la bague de délimitation intérieure (17) et de l'au moins un collet annulaire extérieur (48) de la roue de compresseur (2).

11. Procédé selon la revendication 9, **caractérisé en ce que** l'alimentation en courant du stator (12) a pour effet que la force axiale (21) est exercée sur le rotor (10) dans la direction de l'axe de rotation (4) de sorte que le rotor (10) se déplace dans la direction de l'axe de rotation (4), un mouvement de secousses V étant provoqué par la variation et/ou l'inversion de la puissance d'alimentation électrique.

12. Procédé selon la revendication 11, **caractérisé en ce que** le mouvement de secousses V du rotor (10) est une alternance d'augmentation et de diminution de la distance dans la direction de l'axe de rotation (4) entre la roue de compresseur (2) et la partie de boîtier supérieure (7) et/ou la partie de boîtier inférieure (8), notamment au niveau des extrémités axiales de la bague de délimitation intérieure (17) et de l'au moins un collet annulaire extérieur (48) de la roue de compresseur (2).
